# EUROPEAN PATENT SPECIFICATION

(11) **EP 2 196 457 B1**
(45) Date of publication and mention of the grant of the patent: **10.12.2014**
(21) Application number: 09178741.6
(22) Date of filing: 10.12.2009
(51) Int. Cl.: B82Y 30/00, C08J 3/07, C08J 5/00

(54) **Dispersions of nanoscopic solid phases of noble metals, metalloids or metal sulphides in polymers**
Dispersionen von nanoskopischen Festphasen von Edelmetallen, Metalloiden oder Metallsulfiden in Polymeren
Dispersions de phases solides nanométriques de métaux nobles, métalloïdes ou sulfures métalliques dans des polymères

(30) Priority: 10.12.2008 IT MI20082181
(43) Date of publication of application: 16.06.2010
(73) Proprietor: Punto Quantico S.r.l., 81043 Capua (CE) (IT)
(72) Inventor: Nicolais, Francesca, 81043 Capua, Caserta (IT); Carotenuto, Gianfranco, 81043 Capua, Caserta (IT)
(74) Representative: Long, Giorgio

(56) References cited:
- US-A1- 2006 121 262
- HIDEYO SHINDO ET AL: "Infrared Spectra of Complexes of L-Cysteine and Related Compounds with Zinc(II), Cadmium(II), Mercury(II), and Lead(II)" JOURNAL OF THE AMERICAN CHEMICAL SOCIETY, vol. 87, no. 9, 1965, pages 1904-1909, XP002554608
- LLOPIZ P ET AL: "ETUDE INFRAROUGE ET ESCA DE QUELQUES COMPLEXES METALLIQUES DE LA CYSTEINE" BULLETIN DE LA SOCIETE CHIMIQUE DE FRANCE, SOCIETE FRANCAISE DE CHIMIE. PARIS, FRANCE, no. 11-12, 1 January 1979 (1979-01-01), pages 457-462, XP009125451 ISSN: 0037-8968
- SANG-HO CHA ET AL.: "Thermal Behavior of Gold(I) - Thiolate Complexes and Their Transformation into Gold Nanoparticles under Heat Treatment Process" JOURNAL OF PHYSICAL CHEMISTRY. C, vol. 112, no. 36, 2008, pages 13862-13868, XP002554609
- SANG-HO CHA ET AL: "Preparation and Photoluminescent Properties of Gold(I)- Alkanethiolate Complexes Having Highly Ordered Supramolecular Structures" CHEMISTRY OF MATERIALS, vol. 19, 2007, pages 6297-6303, XP002554610
- INGRAM R S ET AL: "POLY-HETERO-OMEGA-FUNCTIONALIZED ALKANETHIOLATE-STABILIZED GOLD CLUSTER COMPOUNDS" JOURNAL OF THE AMERICAN CHEMICAL SOCIETY, AMERICAN CHEMICAL SOCIETY, WASHINGTON, DC. US, vol. 119, no. 39, 1 May 1997 (1997-05-01), pages 9175-9178, XP002936276 ISSN: 0002-7863
- BRUST M ET AL: "Synthesis of Thiol-derivatised Gold Nanoparticles in a Two-phase Liquid-Liquid System" JOURNAL OF THE CHEMICAL SOCIETY, CHEMICAL COMMUNICATIONS, CHEMICAL SOCIETY. LETCHWORTH, GB, 1 January 1994 (1994-01-01), pages 801-802, XP002483693 ISSN: 0022-4936
- TEMPLETON ALLEN C ET AL: "Water-soluble, isolable gold clusters protected by tiopronin and coenzyme A monolayers" LANGMUIR, ACS, WASHINGTON, DC, US, vol. 15, no. 1, 1 January 1990 (1990-01-01), pages 66-76, XP009105385 ISSN: 0743-7463
- HOSTETLER M J ET AL: "COLLOIDS AND SELF-ASSEMBLED MONOLAYERS" CURRENT OPINION IN COLLOID AND INTERFACE SCIENCE, LONDON, GB, vol. 2, 1 January 1997 (1997-01-01), pages 42-50, XP001015282 ISSN: 1359-0294

## Description

The present invention relates to a process for preparing a dispersion of inorganic nanophases for use in the manufacture of optical, magneto-optical and optoelectronic devices according to claim 1.

### DESCRIPION OF THE PRIOR ART

Preparations comprising a dispersion of a nanoscopic phase of a noble metal, metalloid, or metal sulphide in polymer are known in the art.

In this dispersions, the function of the polymer is, in addition to make the nanostructures capable of being manipulated and thus ready for use, also to protect the nanoscopic inorganic phase surface from oxidation and/or contamination events by molecular adsorption (typically, for example, of SO₂) and avoid the aggregation or selforganization of the nanoparticles.

The preparation of these dispersions must meet a double requirement; in fact, on the one hand, the metal or metalloid, or metal sulphide require to be in nanoscopic form, and on the other hand the dispersion requires to be as smooth as possible and without aggregates, in order to ensure the homogenous characteristics to the final material obtained.

Particularly, a careful selection of the polymer is compulsory to leave the nanoparticle physical characteristics of interest unchanged and thereby making the material suitable for use (e.g., amorphous polymer when the optical characteristics of the nanoparticles are desired to be used).

It is for these reasons that the preparation of these materials requires the inorganic phase to be directly generated *in situ* by thermal decomposition of a suitable precursor that is dissolved or dispersed therein. The formation *in situ* of the inorganic phase is very convenient from a practical point of view because of the high chemical reactivity of the nanoscopic phases produced and of the possible toxicity thereof. Only a few classes of organic compounds may, however, be used as precursor of the metal (noble metal and metalloid) or semiconductive (e.g., a metal sulphide) phase by thermal deposition *in situ.* The precursor compound must be simultaneously: (i) sufficiently stable at an ordinary temperature (25°C-50°C); (i) soluble in an apolar medium such as typically a technopolymer; (ii) have a thermal decomposition temperature consistent with the thermal stability range of polymeric materials, which is quite narrow (generally 150°-200°C). Generally, the few materials that can be used, such as metal carbonyls, acetylacetonates, n-metal-alkene complexes, do not fully meet these requisites and furthermore, suffer from considerable problems of toxicity and volatility. Only organic compounds containing salified hydrosulfide groups (Me-S-, wherein Me is a generic metal and S is sulfur) seem to have such characteristics as to be suitable for this purpose.

The preparation of polymer dispersions of metal or metal sulfide clusters by thermal decomposition of long hydrocarbon chain normal alkylic metal thiolates (mercaptides) that can be represented by the general formula *Meₓ(SCₙH₂ₙ₊₁)_{y},* wherein Me is the metal and n is typically 12, dissolved in a polymer melt has been diffusely described in the literature (G. Carotenuto, L. Nicolais, P. Perlo, B. Martorana, "Procedimento per la produzione di compositi polimero/metallo O solfuro metallico, che utilizza mercaptidi metallici", Italian Patent N. TO2003A000469, year 2003; G. Carotenuto, V. Casuscelli, F. Esposito, S. Leopardi, L. Nicolais, R. Vecchione, M.V. Volpe, R. Vecchione, G. Carotenuto, V. Casuscelli, F. Esposito, S. Leonardi, L. Nicolais, M.V. Volpe, "Process for the preparation of a composite polymeric material" US 2006121262 (A1). Particularly, the thermal decomposition of the normal-alkylthiolates of noble metals and metalloids generally leads to a pure element; in fact, only in a few cases the formation of a mixture of the pure element with the sulfide thereof is observed, such as for example in the decomposition of the antimony and silver thiolates, whereas the decomposition of thiolates of electropositive metals (i.e. less electronegative than noble metals and metalloids and hence those metals having the standard reduction potential thereof expressed in Volts of less than zero) leads to the obtainment of metal sulfide.

In addition to the normal alkylic metal thiolates a wide range of organic compounds containing the functional group MeS-, i.e. organic thio-derivatives (or mercapto-derivates) salts of various nature (e.g., salts of thio-carboxylic acid esters) characterized by a greater polarity/steric hindrance, can be also used in order to generate inorganic phases dispersed in a polymer matrix, without the disadvantages connected with the use of normal alkylic metal thiolates (e.g., a very bad smell, poor polymer and organic solvent solubility, contamination of the nanocomposite with byproducts of the thiolate thermal decomposition, etc.) by offering instead significant advantages.

Normal alkylic metal thiolates have three main drawbacks relative to those of a different type, such as, for example, the metal salts of: thio-esters, thioethers, thio-carboxylic acids, mercapto-aromatic heterocycles, etc.:
i) they are often found in polymeric form (for example gold thiolates have the formula Au₁₀(SR)₁₀) and thus result to be poorly soluble in the polymer and in the organic solvents used for wet-blending operations with the polymer; in addition
ii) their synthesis requires using normal-alkylic thiols (typically, the dodecanethiol, C₁₂H₂₅SH) which result to be very bad smelling due to the presence of synthesis sulphide impurities and thus difficult to handle, whereas the elements of less than 10 carbon atoms results practically unusable for the very bad smell thereof.
iii) the organic byproduct of the thermal decomposition thereof (alkyl-disulphide, RSSR) due to the high boiling point thereof (deriving from a high molecular weight) is almost completely dissolved/dispersed within the polymer matrix and substantially changes the physical-mechanical characteristics thereof. The resulting material is often plasticized and a bad smell may also result therefrom (besides being irritating upon contact with the skin) due to the release of this component. The byproduct may further crystallize in the matrix thereby causing the material to be opaque and thus unusable for optical applications. The removal of the same by washing the material with solvents is a time-consuming and laborintensive operation whereas the use of lighter-weight mercaptides which would accordingly lead to a volatile byproduct (for example, butyl disulphide) that would be removed during the thermal treatment is not feasible since the thiols from which they are derived are very bad smelling.

The prior-art document "Preparation and Photoluminescent Properties of Gold(I)-Alkanethiolate Complex Having Highly Ordered Supramolecular Structures" (Chemistry of materials, vol. 19, 2007, pages 6297-6303) discloses Au(I)-alkanethiolate compounds for use in dispersions.

Prior-art document US 2006/0121262 relates to a process for the preparation of a composite polymeric material comprising nanometric inclusion, which process comprises the steps of mixing a polymer with a thermolytic precursor to provide a dispersion, wherein the thermolytic precursor is a mercaptide or a metallic thiolated of formula [Me(SR)n]. More in particular, within said formula, R csn be any aliphatic, aryl, arylalkyl or alkylaryl residue and, in detail, it can be sulphur resinate, o-methyl phenyl, m-methyl phenyl, p-methyl phenyl, phenyl, p-ter-butyl phenyl, o-methyl-p-ter-butyl phenyl, pinenyl, isopropyl, sec-butyl, 1-mehylheptyl, 1-methyldodecyl, 1-methyloctadodecyl, α-methyl benzyl, α-butyl benzyl, α-undecyl benzyl, ter-dodecyl, ter-amyl, ter-octyl, ter-butyl.

### OBJECT OF THE INVENTION

The object of the present invention relates to a chemical process for preparing a polymer dispersion of a nanoscopic solid phase of a noble metal, a metalloid or a metal sulphide.

### Description of the Figures

Fig. 1 is the DSC thermogram of the gold methyl thioglycolate (0°C-300°C, 10°C/min under a nitrogen flow). The thiolate melts in the range of 30°C-110°C and exothermally decomposes at about 200°C (upward peak), the peak starting at 230°C corresponds to the disulphide evaporation.
Fig. 2 is the TGA thermogram of the gold methyl thioglycolate (30°C-1000°C, 10°C/min under a nitrogen flow). The thiolate is rapidly and completely decomposed at about 200°C producing gold as a residue.
Fig. 3 is the DSC thermogram of the gold ethylhexyl thioglycolate (0°C-350°C, 10°C/min under a nitrogen flow). The thiolate melts in the range of 35°C-70°C and exothermally decomposes at about 226°C (upward peak), the peak starting at 230°C corresponds to the evaporation of the disulphide.
Fig. 4 is the TGA thermogram of the gold ethylhexyl thioglycolate (30°C-1000°C, 10°C/min under a nitrogen flow). The thiolate rapidly and completely decomposes at about 204°C thereby producing gold as a residue.
Fig. 5 shows the TEM micrograph of a Au sample in amorphous polystyrene, obtained by thermal decomposition of the gold ethyl-hexyl-thioglycolate (10% by weight of gold mercaptide) (160.000X).

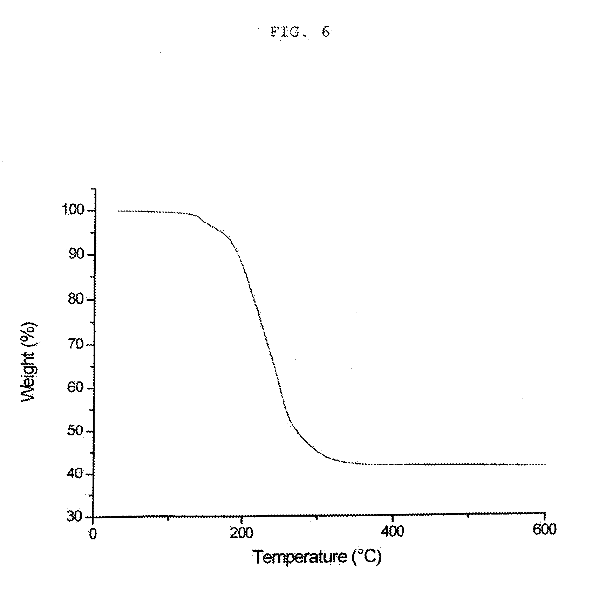

Fig. 6 shows the TGA thermogram of the silver salt of the ethyl-hexyl-thioglycolate (10°C/min under a nitrogen flow). As can be seen, the compound completely thermally decomposes at the temperature of about 123°C, thereby producing silver sulphide as the only product (the experimental residue is equal to the 40% theoretical residue).

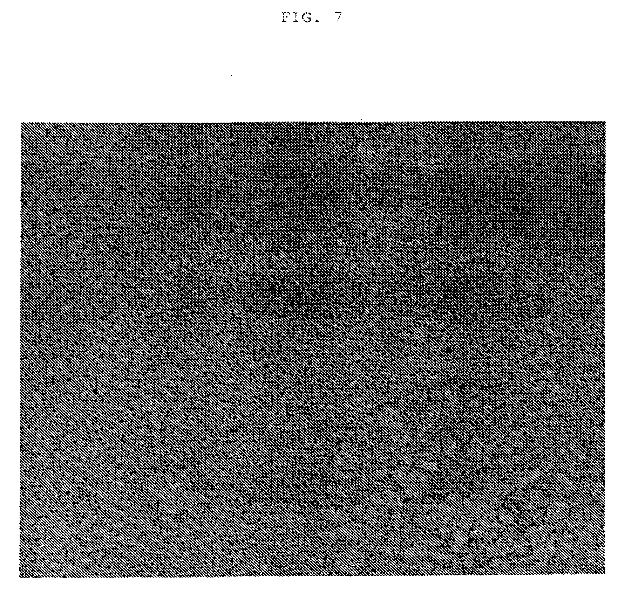

Fig. 7 shows the TEM micrograph of a Ag₂S sample in amorphous polystyrene, obtained by thermal decomposition of the silver ethyl-hexyl-thioglycolate (3% by weight of silver mercaptide) (40.000X).

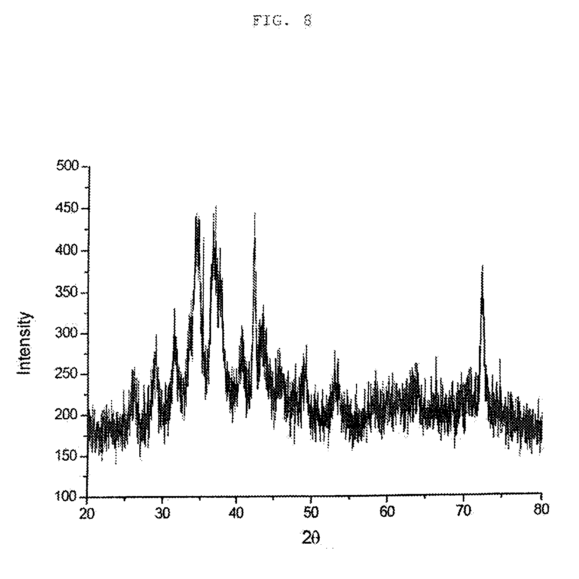

Fig. 8 shows the XRD diffractogram of the thermal decomposition product of the silver salt of the ethyl-hexyl-thioglycolate. The diffraction pattern is that of the silver sulphide.

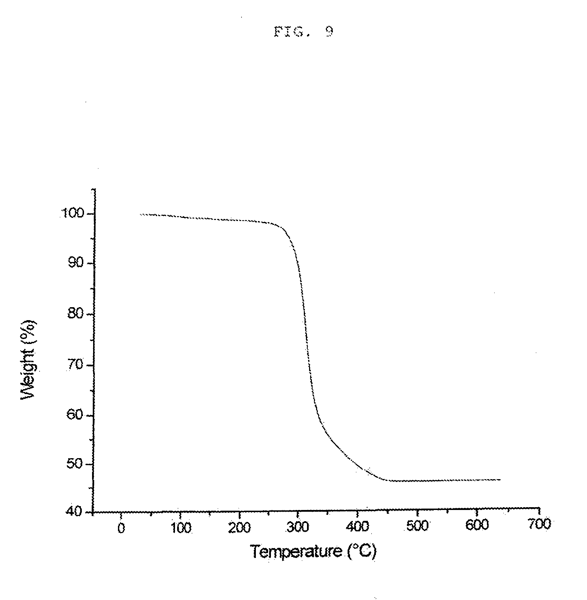

Fig. 9 shows the TGA thermogram of the golden salts of the mercapto-dodecanoic acid (10°C/min under a nitrogen flow). As may be seen, the compound is thermally completely decomposed at a temperature of about 260°C, thereby producing elemental gold as the only product (the experimental residue is equal to the 46.0% theoretical residue).

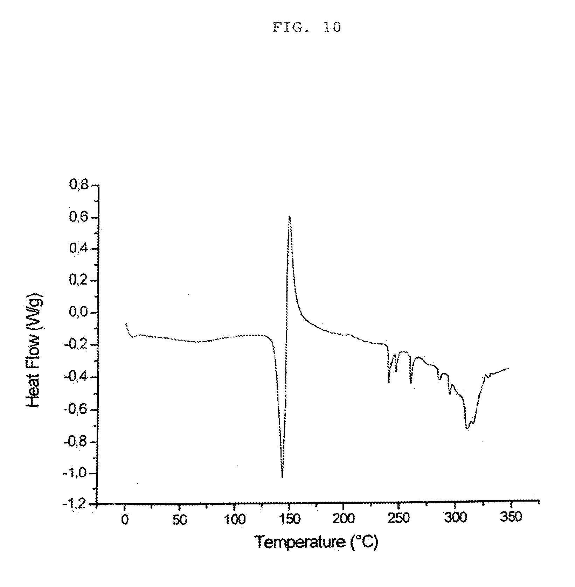

Fig. 10 illustrates the DSC thermogram of the gold salt of the mercapto-dodecanoic acid (10°C/min under a nitrogen flow). As may be seen, the melting of the compound in the temperature range of 130°-144°C is observed partially superimposed to the process of exothermal decomposition (the higher temperature signals can be imputed to the evaporation of the organic byproduct).

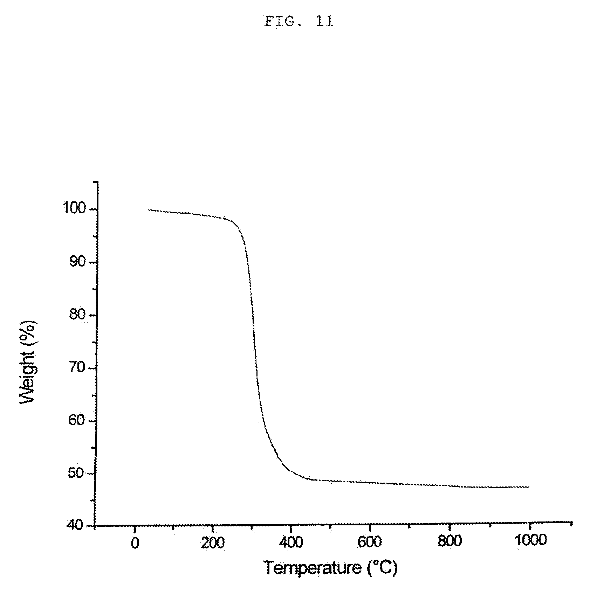

Fig. 11 shows the TGA thermogram of the golden salt of the mercapto-undecanoic acid (10°C/min under a nitrogen flow). As may be seen, the compound completely thermally decomposes at a temperature of about 250°C, thereby producing elemental gold as the only product (the experimental residue is equal to the 46.5% theoretical residue).

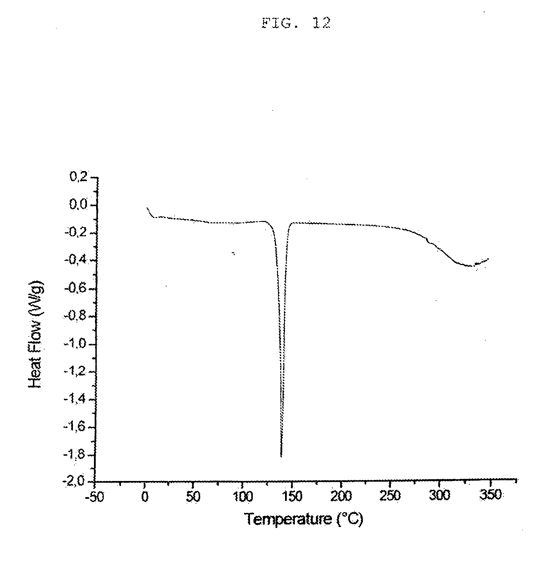

Fig. 12 shows the DSC thermogram of the golden salt f mercapto-undecanoic acid (10°C/min under a nitrogen flow). As may be seen, the melting of the compound is observed in the temperature range of 130°-145°C (the endothermic signal at a higher temperature is likely to be imputed to the evaporation of the organic byproduct).

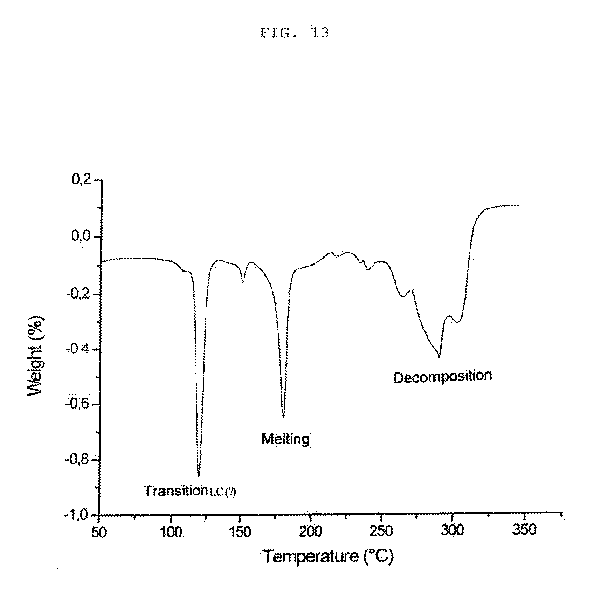

Fig. 13 shows the DSC of the silver cyclohexyl thiolate with indication of the relevant phenomena involved.

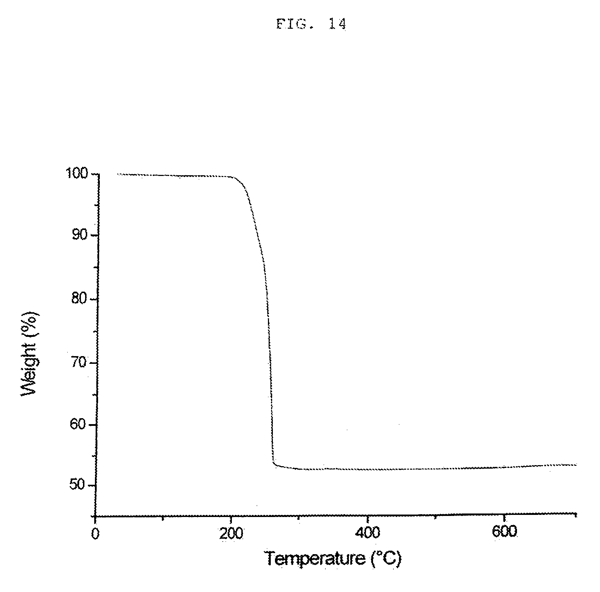

Fig. 14 shows the TGA of the silver cyclohexyl thiolate. The thermal decomposition with the byproduct evaporation starts at about 200°C.
Fig. 15 shows the XRD diffractogram of the powder resulting from the thermal decomposition of the silver cyclohexyl thiolate. The higher intensity reflexes correspond to those of metal silver.
Fig. 16 shows the TEM micrograph illustrating the internal structure of the Ag/amorphous polystyrene nanocomposites.
Fig. 17 illustrates the optical spectrum (UV-Vis) of the Ag/amorphous polystyrene nanocomposite film.

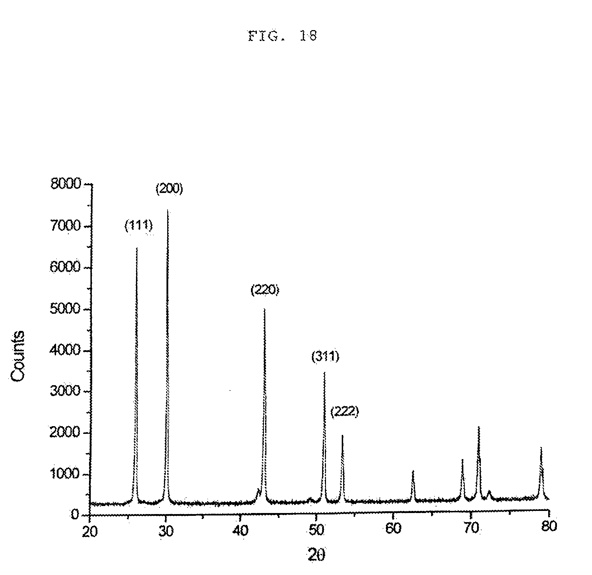

Fig. 18 illustrates the XRD diffractogram of the powder resulting from the thermal decomposition of the lead bis-cyclohexyl thiolate. The reflexes correspond to those of the lead sulphide (PbS).

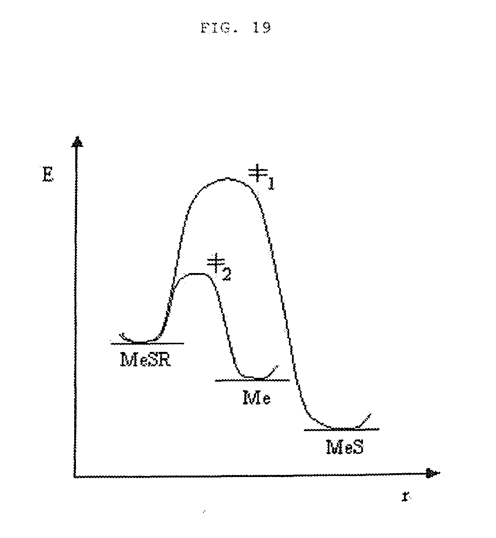

Fig. 19 illustrates the two competitive kinetic mechanisms involved in the thermal decomposition of mercaptides. By discarding the one leading to the formation of sulphide (greater energy of activation of mechanism 1), the elemental metal can be obtained.

### DETAILED DESCRIPTION OF THE INVENTION

The prior art problems are surprisingly overcome due to the use in the inventive polymer dispersion of other thio-salts than mercaptides and more particularly of compounds containing a hydrosulfide (-SH) salified with gold (Au). For example, the metal salts resulting from mercapto-derivates of aromatic heterocycles (e.g., mercapto-imidazole)..

Particularly, the following compounds can be used: of the general formula (5):

**Me(-S-E)ₙ** (5)

wherein Me is gold (Au) and E is selected from N-methyl imidazole and phenyl imidazole and n corresponds to the metal valency.

When the organic sulphide (thio-salt) does not directly precipitate upon contact with the hydrosulfide derivative and the organic salt which are both dissolved in a suitable solvent (e.g., an alcohol), a pH adjustment is required using an ammonia solution or a trialkylamine.

As for the process for preparing these compounds, the reagents are combined in a stechiometric molar ratio and in the presence of an organic solvent at a temperature ranging between 0°C and 40°C. The organic solvent is selected such as to dissolve the thio-derivative (mercapto-derivative), but not the metal salt thereof. Solvents that can be advantageously employed include, for example: alcohols (e.g. ethylic alcohol).

The thio-salt produced from the reaction between the inorganic salt and the thio-derivate precipitates. There follows the separation of the solid phase from the liquid phase, then the solid phase is washed with water or aqueous solutions in order to remove the hydrochloric acid produced, and, finally, drying is carried out. In order to remove the residual water, the product can be washed before drying using a mixture of methanol (CH₃OH) or ethanol (CH₃CH₂OH) and methylene chloride (CH₂Cl₂) or another low-boiling chlorinated aliphatic hydrocarbon.

After the sulfur-organic compound salt is obtained, this can be used for preparing the polymer dispersion.

Particularly, to the purpose of the present invention, the polymers that can be used include: amorphous and semi-crystalline thermoplastic polymers, elastomeric polymers (e.g. polysiloxanes), thermosetting resins (e.g., epoxy), optical plastics, such as polystyrene, poly(methyl-methacrylate), polycarbonate, poly(vinyl acetate), etc.; preferably, this polymer is amorphous polystyrene.

The number density of the clusters generated in the polymer depends on the amount of the sulfur-organic compound salt (precursor) dissolved/dispersed in the polymer mixture, in order to obtain contact-free topologies (i.e. polymeric dispersions of inorganic clusters free of aggregates) the percentage of salt of the sulfur-organic compound generally used is lower than 30% by weight. Typically, the weight percentages range from 1% to 15%; for example, they can be 1%, 3%, 5%, 10% and 15%.

As the sulfur-organic compound salt, precursor of the nanodispersed phase, must be introduced in the polymer at lower temperatures than those required for the thermal decomposition thereof, a wet way is used that consists in dissolving the polymer and sulfur-organic compound salt in a suitable solvent (typically chloroform) then slowly removing the solvent by evaporation in air; particularly, the solvent removal must be carried out slowly to prevent the cooling of the liquid system with the resulting separation (precipitation) of the sulfur-organic compound salt. At the end of this operation, the polymer/salt of the sulfur-organic compound mixture is recovered in the form of a film of a few tenths of a millimeter. Furthermore, the sulfur-organic compound salt can be dissolved in liquid monomer (e.g. methylmethacrylate, MMA) that is thus turned into a polymer solid (e.g. PMMA), which will contain the sulfur-organic compound salt dissolved/dispersed therein, by means of the addition of a primer (e.g. benzoyl peroxide) or a photoinitiator and in the latter case, UV radiation exposure is required (this technique cannot, however, be used when the organic sulphide is photodegradable, e.g., bismuth thioglycolate).

The polymer/salt blend of the sulfur-organic compound is then heated on a metal plate in order to determine the decomposition of the sulfur-organic compound salt with saturation/oversaturation of the polymer matrix and thus precipitation of the inorganic phase in nanoscopic form. As the heating must be isothermally carried out at a temperature higher than or equal to that of the decomposition of the sulfur-organic compound salt, the plate is connected to a control system which allows for the thermal stabilization of the plate at a suitable temperature value. In order to level the thermal flow, a metal block is interposed between the plate and the polymer/salt of the sulfur-organic compound blend. Being the polymer a heat insulator, in order to get an even heat treatment the material is required to be heated in the form of a film; in addition, a heat insulator (e.g., a glass) is placed on the sample to avoid any contact with the air (which would cause a partial oxidation of the polymer) and to restrain heat dispersion (to this end, a pre-heated metal block can be also used in contact with the plate). The isothermal heating can be carried out under different conditions according to the morphology one desires to obtain for the inorganic nanoscopic inclusions. Particularly, long-lasting annealing, i.e. lasting tens of minutes, at reduced temperatures (110-150°C) to obtain a few particles of a relatively large size (proximate to 100 nm) and of regular geometry (nucleation and grow regime), or shortlasting heating (a few tens of seconds) at a very high temperature (250°C-300°C) to obtain a high number density of particles of just a few nanometers (continuous nucleation regime).
The present invention has been particularly described with reference to the preparation of a metal salt of mercapto-derivates of aromatic heterocycles and other organic mercapto-derivatives.

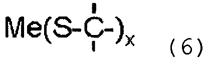

The process for preparing the compound of the general formula (6) comprises using a halide, a sulfate, a nitrate, a perchlorate, a salt of a strong or weak acid containing the metal ion (Me). Particularly, this halide, sulfate, nitrate, perchlorate, acetate or salt of a strong or weak acid must be soluble in water and/or in alcohol.

Alternatively, oxides and hydroxides containing the metal ion Me can be also used.

The salification of the organic thio-derivate can be facilitated by changing the pH, particularly by adding a few drops of NH₄OH.

Those skilled in the art will be capable of adjusting the conditions of reaction to each particular case.

These compounds of the general formula (6) can be advantageously used for preparing the dispersions being the object of the present invention as described above.

### EXAMPLE 1 (not of the invention)

### Preparation of a gold/polystyrene nanocomposite additive

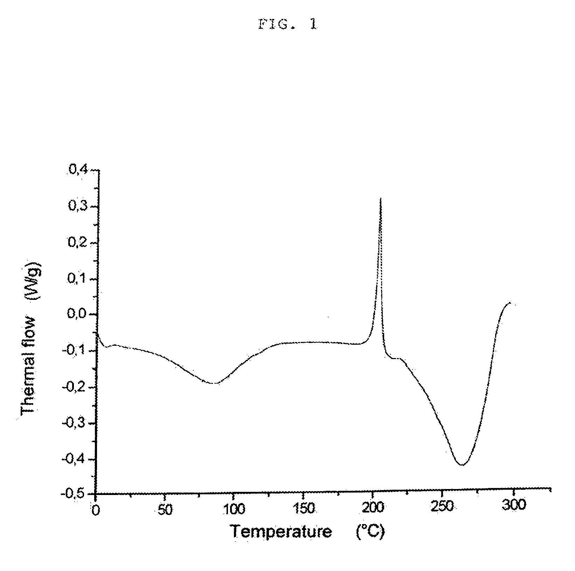

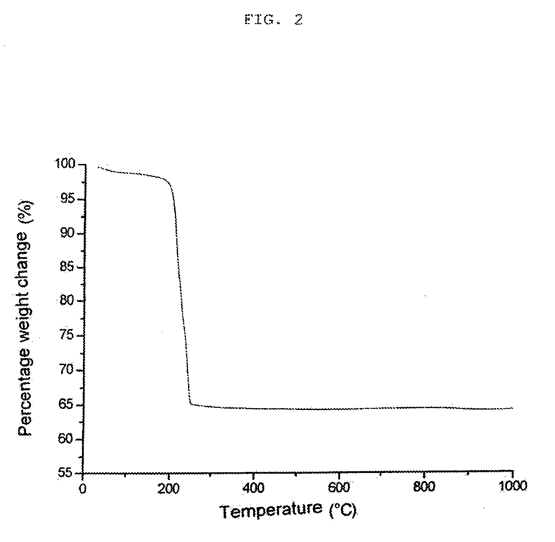

1 ml of methyl-thioglycolate (HSCH₂CO₂CH₃, Aldrich, 95%) has been dissolved in ethanol at ambient temperature and then the solution has been added under stirring to a solution obtained dissolving 1,24 mg of gold tetra-chloride trihydrate acid (HAuCl₄.3H₂O, Aldrich, 99,9+%) in ethanol. After a few seconds, a white microcrystalline precipitate is formed that is then separated by means of Buckner filtration. The microcrystalline product is completely insoluble in ethanol and is thus carefully washed on the filter with ethanol. This compound is, on the other hand, very soluble in a methylethylketone (MEK) and chloroform mixture and is accordingly used for the wet-blending operation with polystyrene. The gold methylthioglycolate/polystyrene mixture in the form of a film is finally heated on a plate at 200°C thereby obtaining the gold/polystyrene nanocomposite (particularly, from calorimetry (DSC) and thermogravimetry (TGA) data the methylthioglycolate melts in the range of 36°C-110°C and is decomposed at 200°C) (Fig. 1 and 2).

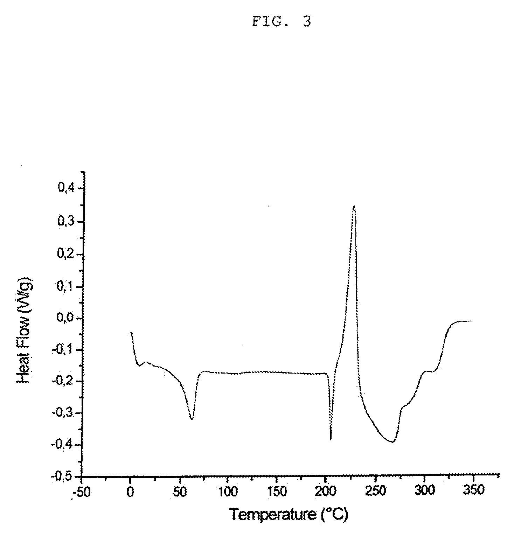

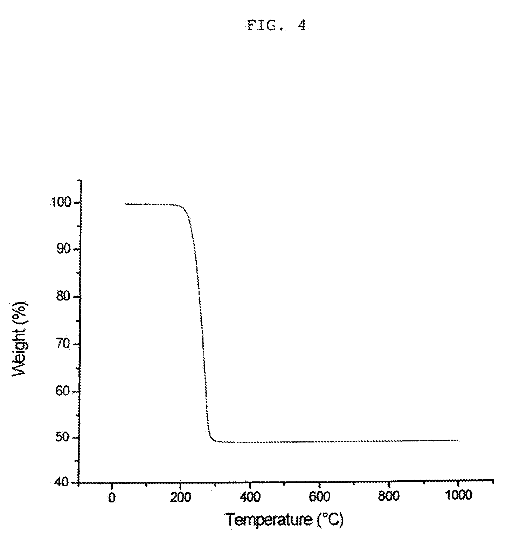

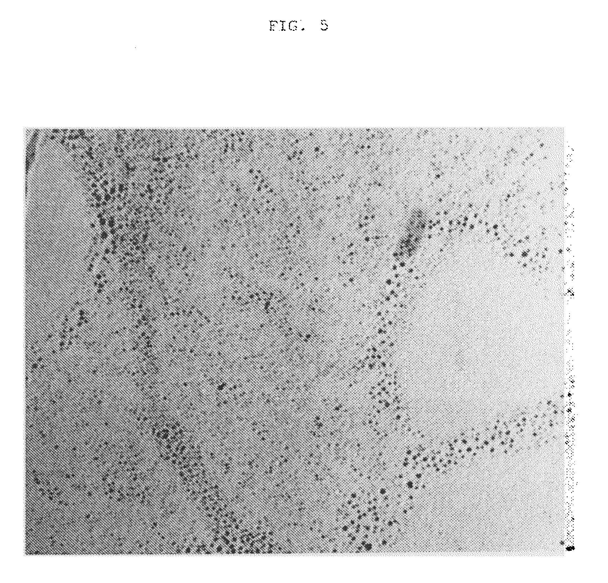

The gold salt of 2-ethylhexyl-thioglycolate (Aldrich, 95%) (Fig. 3 and 4) and the nanocomposite thereof with the polystyrene (Fig. 5) can be prepared in an entirely similar manner.

### EXAMPLE 2 (not of the invention)

### Ag₂S/polystyrene nanocomposite from the ethyl-hexyl-thioglycolate silver salt

6.9g silver nitrate (AgNO₃, Aldrich) has been dissolved in 300mL acetonitrile (CH₃CN, Fluka) and to this solution has been added a solution made of 8.3g ethyl-hexyl-thioglycolate (C₁₀H₂₀O₂S, Aldrich) dissolved in 25 mL acetone. The amounts used were as required by the reaction stechiometry. A straw-yellow precipitate was formed immediately after the addition of the thiol and the compound was separated by pump filtration and left to dry in the air. The compound is not stable in the air and it probably tends to oxidize thus forming metal silver. The blend with the amorphous polystyrene is obtained by dissolving the polystyrene in methyl-ethyl-ketone (MEK) the mercaptide in a mixture (MEK-Chloroform) and the two solutions and the solvent left to evaporate in the air. The thermal decomposition of the ethyl-hexyl-thioglycolate leads only to the silver sulphide as determined by means to XRD.

### EXAMPLE 3 (not of the invention)

Gold salt of the mercapto-dodecanoic acid 282.5mg gold tetra-chloride acid(HAuCl₄.3H₂O, Aldrich) has been dissolved in ethanol and 500mg mercapto-dodecanoic acid (C₁₂H₂₄O₂S, Aldrich) dissolved in ethanol has been added thereto. The precipitate, at first straw-yellow, changed into white colour after being digested under magnetic stirring at ambient temperature. The compound has been separated by centrifugation (10 min at 10000 r.p.m.) and left to dry in the air. The material resulted to be stable for some days, then was subject to photochemical decomposition. A polyvinyl alcohol(PVA)-based film has been prepared by dissolving the fresh mercaptide in double distilled water, containing ammonium hydroxide (NH₄OH) to salify the carboxyl group, incrementing the water solubility thereof. The solution has been left to evaporate in the air to obtain the precursor film which has been finally removed and heat treated at 200°C to produce the nanocomposite. The film developed a ruby-red colour during the heat treatment which changed into blue. This colour is the one linked to the phenomena of the plasma resonance of thiolunprotected nanoscopic gold. Therefore, the reaction is likely to proceed by the reduction of the Au(I) ion performed by the PVA hydroxides.

### EXAMPLE 4 (not of the invention)

### Gold salt of the mercapto-undecanoic acid

The gold tetra-chloride acid (HAuCl₄.3H₂O, Aldrich) is dissolved in ethanol and a mercapto-undecanoic acid (C₁₁H₂₂O₂S) in ethanol solution is added thereto. The formation of a precipitate is observed, which is first straw-yellow and then changes, by digestion under magnetic stirring at ambient temperature, into white microcrystalline. The precipitate is separated by centrifugation (10 min at 7000 r.p.m.) and left to dry in the air. The resulting compound was stable for several days then was subject to photochemical decomposition. In order to prepare the polyvinyl alcohol film, the same operations are carried out as for the mercapto-dodecanoic acid.

### EXAMPLE 5 (not of the invention)

### Silver salt of cyclohexyl thiol (silver cyclohexyl thiolate)

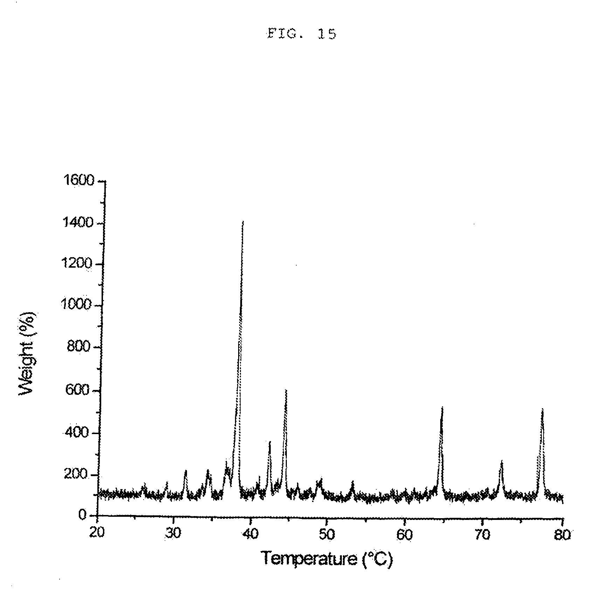

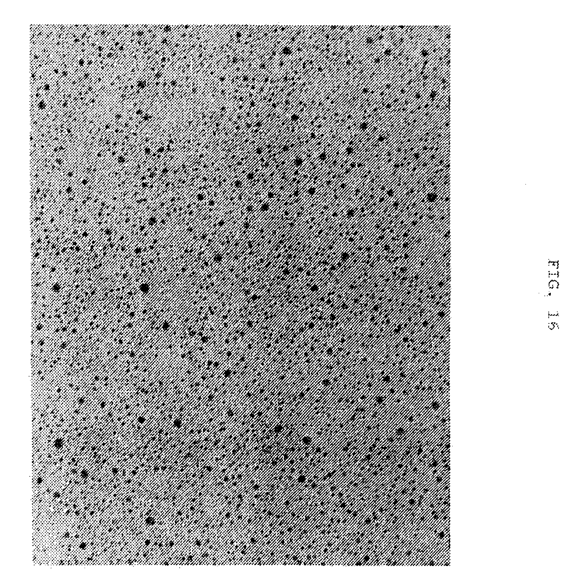

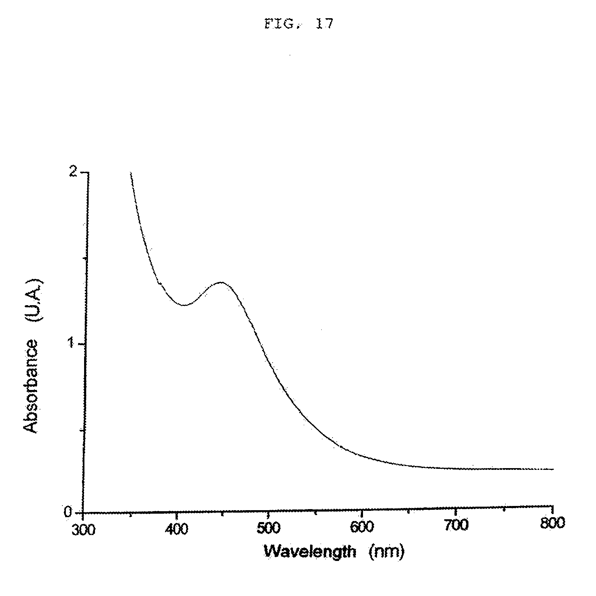

1mL cyclohexyl thiol (C₆H₁₁-SH) has been poured in a glass vial and a silver nitrate solution (2g) in acetonitrile (60ml) has been added thereto. All the products were by Aldrich and have been used without prior purification. In order to obtain the complete precipitation of the thiol in form of thiolate (in order to reduce the thiol smell during the process) the silver was present in a large stechiometric excess relative to the thiol. A precipitate was not immediately obtained and, though some precipitation was observed, the precipitate was immediately completely dissolved. The thiolate precipitated only after adding an aqueous solution of ammonium hydroxide (3mL). The very light yellow precipitate was separated by pump filtration and then carefully washed on a filter with acetone. After drying, the material slightly hydrolyzed when it was left in the air and thus it was stored within a sealed vial shielded with aluminum foil to prevent photodecomposition. The compound obtained melted by heating at the temperature of 170°C by forming a yellow clear liquid bulk that at higher temperatures (250°C) decomposed and formed metal silver. The nature of the thermal transitions observed using DSC was determined by observing the sample while heating the latter in a Melting Point. Particularly, during the thermal decomposition the formation of an orange colour was first observed which is a characteristic of the nanoscopic metal silver (optical absorption due to the surface plasma resonance), which then changed into black to finally give a silver powder (aggregation of the metal particles) (see Fig. 15). The mercaptide was added to a polystyrene solution in chloroform, thereby forming a quite stable suspension (the silver mercaptide was not soluble in chloroform) which was then cast in a Petri dish and left to dry in the air. A blend containing 1.4% silver cyclohexyl thiolate resulted in the form of a quite clear and light-yellow film. The heat treatment of these precursor films lead to the obtainment of Ag/polystyrene nanocomposites having the microstructure illustrated in Fig. 16 and a deep yellow colour, deriving from the characteristic absorption of plasma resonance of the silver nanoparticles (see Fig. 17).

### EXAMPLE 6 (not of the invention)

### Lead salt of the cyclohexyl thiol (lead bis-cyclohexyl thiolate)

Lead perchlorate (Pb(ClO₄)₂) has been dissolved in ethanol and the thus-obtained solution was added to a solution of cyclohexyl thiol (C₆H₁₁-SH) in ethanol. The lead perchlorate was in stechiometric excess relative to the thiol. During the addition, the solution did not become turbid, but became yellow and a precipitate was obtained only after an aqueous ammonia solution (NH₄⁺OH⁻) was added. The lead bis-cyclohexyl thiolate (Pb(SC₁₂H₁₁)₂) precipitate is of yellow colour and is separated by pump filtration and repeatedly washed on a filter with anhydrous ethyl alcohol and finally left to dry in the air. The lead bis-cyclohexyl thiolate melts at 144°C thereby forming an orange liquid that is perfectly clear and stable which decomposes at higher temperatures (207°C), thereby producing a ductile PbS shining black powder (see XRD in the figure), which can be easily compacted by means of cold pressing (2 ton). The compacted material is electrically conductive and has a low resistivity. The lead bis-cyclohexyl thiolate is dissolved in chloroform (CHCl₃) and the solution added to a solution of amorphous polystyrene (molecular weight 230.000gmol⁻¹) in chloroform, the solution is casted into an encapsulating glass (Petri dish) and the solvent is left to evaporate in the air at ambient temperature such as to obtain films of a lead bis-cyclohexyl thiolate/polystyrene solid solution. A polystyrene/lead bis-cyclohexyl thiolate film at 3.54% by weight provided a PbS/polystyrene nanocomposite film with fluorescent characteristics by heat treatment at a temperature of 200°C.

### Mechanistic considerations

The thermal decomposition of several thio-salts (for example, silver, antimony, copper salts, etc.) can lead to the formation of the metal, Me, or metal sulfide, MeₓS_{y}, according to the nature of the substituents that are present on the carbon α (i.e. the carbon atom carrying the mercapto-salified group). Particularly, both inductive and steric hindrance effects can play a role in guiding the reaction to either products.

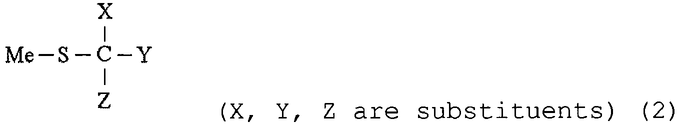

For example, when the carbon α is a secondary carbon (X,Y = R), especially when it is prevented from rotating (e.g. cyclohexyl-thiolate, cyclopentyl-thiolate, etc.), the formation of sulfide occurring through SN₂ mechanism is not favored, and only the kinetic process can be accordingly carried out, which leads to the formation of the elemental metal and which is obtained through the homolitic cleavage of the Me-S link. On the other hand, the presence of a carbonyl group on the carbon α (e.g., ester, amide, carboxylic group, etc.) originates a partial charge thereon by inductive effect (which results from a greater electro-negativity of the hybrid carbon sp₂ and from the carbonyl structure which by 50% has a charge separation structure) this improves the characteristics of the nucleophilic substrate of carbon α, thereby facilitating the formation of the metal sulfide through the mechanism SN₂ (3).

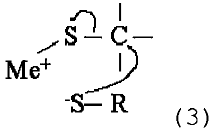

However, in the case of more electropositive metals such as the lead, using structures with the sterically hindered carbon α (secondary carbon involved in a cycle sterically hindered to rotate) is not however capable of guiding the reaction to the formation of the metal and only the sulfide is again obtained.

## Claims

1. A process for preparing a dispersion comprising a polymer and a nanoscopic inorganic phase of gold (Au), comprising the steps of:
a') mixing a polymer and a thermolabile organic precursor of a salt of mercapto-imidazole having the general formula (5):
**Me(-S-E)ₙ** (5)
wherein Me is gold (Au) and E is selected from N-methyl imidazole and phenyl imidazole, and n corresponds to the metal valency thereby obtaining an homogeneous mixture;
b') heating said homogeneous mixture such as to cause the thermal decomposition of said thio-salt thereby forming a gold nanoscopic inorganic phase.

2. The process according to claim 1, wherein the thio-salt is mixed to the polymer in a weight percentage lower than 30%.

3. The process according to claim 1 or 2, wherein the thio-salt is mixed to the polymer in a weight percentage comprised between 1% and 15%.

4. The process according to claims 1 to 3, wherein said polymer of step a') is selected from amorphous or semicrystalline polymers, elastomeric polymers, thermosetting resins or optical plastics.

5. The process according to claims 1 to 4, wherein the heating of the step b') is carried out at a temperature comprised between 110°C and 300°C.

6. The process according to claims 1 to 5, wherein said polymer of step a') is amorphous polystyrene and the heating of the step b') is carried out at a temperature of 200°C.

## Patentansprüche

1. Verfahren zum Herstellen einer Dispersion, welche ein Polymer und eine nanoskopische anorganische Phase aus Gold (Au) umfasst, umfassend die Schritte von:
a') Mischen eines Polymers und eines thermolabilen organischen Vorläufers eines Salzes von Mercaptoimidazol, welches die allgemeine Formel (5) aufweist:
**Me(-S-E)ₙ** (5)
wobei Me Gold (Au) ist und E ausgewählt ist aus N-Methylimidazol und Phenylimidazol, und n der Metalvalenz entspricht, wobei dadurch eine homogene Mischung erhalten wird;
b') Erwärmen der homogenen Mischung, so dass die thermische Zersetzung des Thiosalzes verursacht wird, wobei dadurch eine nanoskopische anorganische Phase aus Gold gebildet wird.

2. Verfahren nach Anspruch 1, wobei das Thiosalz zu dem Polymer in einem Gewichtsanteil geringer als 30% gemischt wird.

3. Verfahren nach Anspruch 1 oder 2, wobei das Thiosalz zu dem Polymer in einem Gewichtsanteil gemischt wird, der zwischen 1% und 15% umfasst.

4. Verfahren nach Ansprüchen 1 bis 3, wobei das Polymer von Schritt a') ausgewählt ist aus amorphen oder semikristallinen Polymeren, elastomeren Polymeren, wärmehärtenden Harzen oder optischen Kunststoffen.

5. Verfahren nach Ansprüchen 1 bis 4, wobei das Erwärmen des Schritts b') bei einer Temperatur durchgeführt wird, die zwischen 110°C und 300°C umfasst ist.

6. Verfahren nach Ansprüchen 1 bis 5, wobei das Polymer von Schritt a') amorphes Polystyrol ist und das Erwärmen des Schritts b') bei einer Temperatur von 200°C durchgeführt wird.

## Revendications

1. Procédé de préparation d'une dispersion comprenant un polymère et une phase inorganique nanoscopique d'or (Au), comprenant les étapes :
a') de mélange d'un polymère et d'un précurseur organique thermolabile d'un sel de mercapto-imidazole présentant la formule générale (5) :
Me(-S-E)ₙ (5)
où Me est l'or (Au) et E est choisi parmi le N-méthylimidazole et le phénylimidazole, et n correspond à la valence de métal obtenant par là un mélange homogène ;
b') de chauffage dudit mélange homogène afin d'occasionner la décomposition thermique dudit thio-sel formant par-là une phase inorganique nanoscopique d'or.

2. Procédé selon la revendication 1, dans lequel le thio-sel est mélangé au polymère dans un pourcentage massique inférieur à 30 %.

3. Procédé selon la revendication 1 ou 2, dans lequel le thio-sel est mélangé au polymère dans un pourcentage massique compris entre 1 % et 15 %.

4. Procédé selon les revendications 1 à 3, dans lequel ledit polymère de l'étape a') est choisi parmi des polymères amorphes ou semi-cristallins, des polymères élastomères, des résines thermodurcissables ou des matières plastiques optiques.

5. Procédé selon les revendications 1 à 4, dans lequel le chauffage de l'étape b') est réalisé à une température comprise entre 110°C et 300°C.

6. Procédé selon les revendications 1 à 5, dans lequel ledit polymère de l'étape a') est du polystyrène amorphe et le chauffage de l'étape b') est réalisé à une température de 200°C.
